# FASCICULE DE BREVET EUROPEEN

(11) **EP 1 041 227 B1**
(45) Date de publication et mention de la délivrance du brevet: **14.01.2004**
(21) Numéro de dépôt: 00400891.8
(22) Date de dépôt: 31.03.2000
(51) Int. Cl.: E05B 49/00, B60R 25/00

(54) **Systéme d'accès dit "mains libres" pour un véhicule automobile, équipé d'un dispositif avertisseur**
Mit einer Warnvorrichtung ausgerüstetes handfreies Zugangssystem für ein Kraftfahrzeug
Hand-free access system for a motor vehicle equipped with a warning device

(30) Priorité: 02.04.1999 FR 9904148
(43) Date de publication de la demande: 04.10.2000
(73) Titulaire: VALEO SECURITE HABITACLE S.A.S., 94042 Créteil Cédex (FR)
(72) Inventeur: Baudard, Xavier, 75016 Paris (FR); Haydar, Aham, 93230 Romainville (FR)
(74) Mandataire: Hervouet, Sylvie

(56) Documents cités:
- EP-A- 0 318 637
- DE-A- 19 607 117
- DE-C- 19 735 658
- DE-C- 19 738 323
- FR-A- 2 700 625

## Description

La présente invention concerne un système d'accès dit "mains libres" pour un véhicule automobile, comportant un moyen d'identification installé sur le véhicule, au moins un identifiant porté par un utilisateur, et un dispositif avertisseur pour signaler par exemple la présence d'un identifiant dans le véhiculer (à comparer avec DE-C-19 738 323).

Dans un tel système, un échange à distance de données s'établit entre le moyen d'identification et l'identifiant pour commander les moyens de verrouillage des ouvrants du véhicule, lorsque le moyen d'identification a authentifié l'identifiant. Dans ce type de système, l'utilisateur doit, tout d'abord, pour obtenir l'accès, faire débuter une opération d'identification. Le démarrage de l'opération peut être obtenu par exemple par action sur un bouton de commande situé sur l'ouvrant, ou par une commande à distance, ou éventuellement par un détecteur de présence installé dans l'habitacle du véhicule.

Généralement, le verrouillage du véhicule est commandé lorsque le conducteur portant un identifiant quitte le véhicule. En effet, lorsque l' identifiant, constitué par exemple par une télécommande équipée d'une carte à puces ou d'un transpondeur disposé dans un badge, une tête de clé ou un porte-clés, s'éloigne d'une distance prédéterminée du véhicule, le moyen d'identification du véhicule ne reçoit plus de signal en provenance de l'identifiant, ce qui provoque la commande d'un certain nombre d'organes du véhicule qui ont pour fonction d'assurer l'immobilisation de ce dernier. Dans des systèmes perfectionnés, le moyen d'identification provoque à la fois le verrouillage des portières d'accès au véhicule, le blocage du mécanisme de direction et l'inhibition des dispositifs d'allumage et d'injection de carburant du moteur du véhicule.

Un tel système d'accès est généralement efficace pour interdire l'accès du véhicule à une personne non autorisée. Toutefois, dans la pratique, des problèmes peuvent survenir lors de l'utilisation d'un tel système d'accès "mains libres", notamment dans l'utilisation de l'identifiant destiné à être porté par un utilisateur.

Par exemple, un utilisateur peut oublier un identifiant dans le véhicule, ou bien perdre son identifiant dans le véhicule ou à proximité de ce dernier.

Il peut également se produire que le conducteur portant l'identifiant quitte le véhicule, alors que celui-ci est toujours en marche, ce qui pourrait provoquer le verrouillage du véhicule alors que celui-ci est toujours en marche, lors de l'éloignement du conducteur.

Il est également possible de pirater un tel système d'accès, en intercalant un ensemble d'émission-réception entre le moyen d'identification sur le véhicule et l'identifiant porté par l'utilisateur qui s'éloigne du véhicule, cet ensemble d'émission-réception servant en fait de répéteur du signal permettant d'authentifier l'identifiant, et donc d'obtenir l'accès au véhicule, sans la présence de l'utilisateur portant l'identifiant.

En outre, lorsque la batterie de l'identifiant est déchargée, l'utilisateur peut se voir contraint à utiliser sa clé pour commander mécaniquement le verrouillage ou le déverrouillage des portières du véhicule.

Dans le document FR-A-2 700 625, on a proposé un procédé pour détecter l'oubli d'un identifiant à l'intérieur du véhicule. Selon ce procédé, si, après l'ouverture d'une portière ou l'arrêt du moteur, le niveau du signal émis par l'identifiant présent dans l'habitacle du véhicule n'évolue pas et reste sensiblement constant pendant une période prédéfinie, de l'ordre de quelques secondes, l'unité centrale embarquée sur le véhicule active un dispositif d'alerte du véhicule qui génère l'émission d'un signal visuel et/sonore signalant l'oubli de l'identifiant dans le véhicule. Toutefois, un tel procédé est relativement complexe, car il nécessite de calculer l'évolution dans le temps du niveau de puissance du signal en provenance des identifiants et de contrôler cette évolution après chaque ouverture des ouvrants et après chaque arrêt du moteur du véhicule.

L'invention a pour but d'éliminer l'un au moins des inconvénients précités et de proposer un système d'accès à un véhicule automobile, qui soit fiable et simple à réaliser.

A cet effet, l'invention a pour objet un système d'accès dit "mains libres" pour un véhicule automobile, comportant un moyen d'identification relié à une unité centrale de commande sur le véhicule, pour commander des moyens de verrouillage des ouvrants du véhicule, et au moins un identifiant destiné à être porté par un utilisateur et apte à échanger à distance des données avec le moyen d'identification pour autoriser l'accès au véhicule, lorsque l'identifiant a été authentifié par le moyen d' identification, caractérisé par le fait que chaque identifiant est équipé d'un générateur de signal sonore qui est apte à engendrer au moins un signal sonore pour signaler à l'utilisateur un état donné de l'identifiant.

Selon une première forme de réalisation, ledit générateur est apte à engendrer un signal sonore d'authentification, en réponse à un signal d'interrogation émis par le moyen d' identification, lorsque l'identifiant a été authentifié par le moyen d'identification. Ainsi, l'utilisateur peut avoir la confirmation que l'ordre de verrouillage ou de déverrouillage a bien été effectué par le système d'accès "mains libres".

Avantageusement, ledit générateur est apte à engendrer un signal sonore de réveil, lorsque l'identifiant reçoit un signal basse fréquence ou haute fréquence, dont l'amplitude est supérieure à une valeur de seuil prédéterminé. Ainsi, si un pirate introduit un répéteur entre l'identifiant porté par l'utilisateur et le moyen d'identification installé sur le véhicule, l'identifiant engendrera un signal sonore, ce qui pourra alerter l'utilisateur, si celui-ci se trouve à distance du véhicule.

Selon encore une autre caractéristique, lorsque l'identifiant émet un signal basse fréquence ou haute fréquence, l'unité de gestion sur l'identifiant contrôle le niveau de charge de la batterie de l'identifiant, et si ce niveau est inférieur à un niveau de seuil prédéterminé, le générateur de l'identifiant est apte à engendrer un signal sonore d'alarme.

Selon encore une autre caractéristique, lorsque l'unité centrale de commande détecte la fermeture d'au moins un ouvrant du véhicule, le moyen d'identification émet un signal de désactivation dans l'habitacle du véhicule, pour désactiver le générateur de chaque identifiant authentique présent dans le véhicule. Dans ce cas, on peut également prévoir que, lorsque l'unité centrale de commande détecte la fermeture d'au moins un ouvrant du véhicule, le moyen d'identification émet un signal d'activation à l'extérieur du véhicule, pour réactiver le générateur éventuellement préalablement désactivé de chaque identifiant situé à proximité du véhicule.

Selon une autre caractéristique, lorsque l'unité centrale de commande détecte à la fois la fermeture d'un ouvrant et l'état de marche du véhicule, le moyen d'identification émet un signal d'interrogation à l'extérieur du véhicule, afin que le générateur de chaque identifiant situé à proximité du véhicule réponde en engendrant un signal sonore de présence. Ainsi, si le conducteur du véhicule portant un identifiant quitte le véhicule alors que celui-ci est encore en marche, un signal sonore préviendra le conducteur dès qu'il s'éloigne du véhicule.

Selon une autre forme de réalisation de l'invention, lorsque l'unité centrale de commande détecte un ordre de verrouillage du véhicule à partir de l'extérieur, le moyen d'identification émet un signal d'interrogation dans l'habitacle du véhicule, afin que le générateur de chaque identifiant présent dans le véhicule réponde en engendrant un signal sonore de présence. Ainsi, l'utilisateur sera averti de l'oubli de l'identifiant dans le véhicule, avant qu'il s'en éloigne.

On peut également prévoir que, lorsque l'unité centrale de commande détecte un ordre de recherche d' identifiant, par exemple sous l'action d'un bouton de commande spécifique dans l'habitacle, le moyen d'identification émet un signal d'interrogation à la fois dans l'habitacle et à l'extérieur du véhicule, afin que le générateur de chaque identifiant présent dans l'habitacle et à proximité du véhicule réponde en engendrant un signal sonore de présence. Ainsi, si l'utilisateur a perdu un identifiant dans le véhicule ou à proximité de celui-ci, le signal sonore de l'identifiant pourra lui permettre de le retrouver.

Avantageusement, le générateur de signal sonore peut être remplacé par un vibreur apte à engendrer des vibrations et à les transmettre à l'utilisateur qui porte l'identifiant. Par exemple, le vibreur peut être associé à une membrane souple dont les vibrations sont transmises à l'utilisateur qui porte l'identifiant dans une poche ou dans la main.

De préférence, le signal sonore ou les vibrations diffèrent selon l'état de l'identifiant à signaler à l'utilisateur.

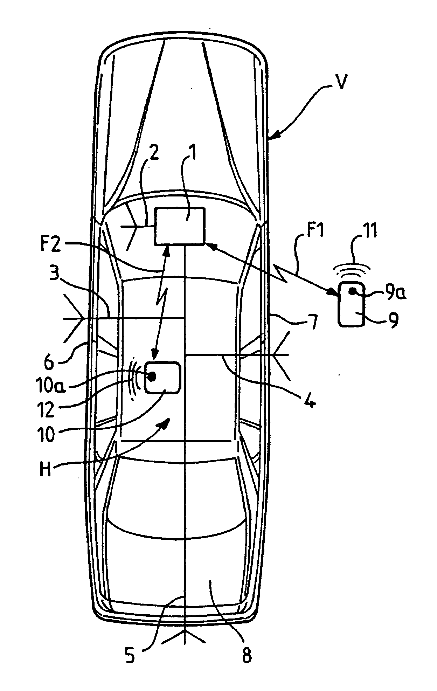

Pour mieux faire comprendre l'objet de l'invention, on va en décrire maintenant à titre d'exemple purement illustratif et non limitatif, un mode de réalisation représenté sur le dessin annexé. Ce dessin comporte une figure unique représentant schématiquement, en vue de dessus, un véhicule automobile équipé du système selon l'invention.

Sur cette figure, on voit un véhicule automobile V comportant une unité centrale de gestion 1 reliée à plusieurs antennes 2 à 5. L'antenne 2 est agencée à l'intérieur de l'habitacle H du véhicule et présente une zone de couverture s'étendant sensiblement dans tout l'habitacle. Les antennes 3 et 4 sont extérieures à l'habitacle du véhicule et situées, par exemple, dans les poignées de portières latérales 6, 7. L'antenne 5 est également extérieure à l'habitacle et s'étend vers l'arrière du véhicule, sensiblement au niveau du hayon de coffre 8. L'antenne 2 est localisée de préférence au niveau du mécanisme de blocage de la colonne de direction.

Les identifiants 9, 10 se présentent par exemple sous la forme de badges qui sont en liaison hertzienne, comme matérialisé par les flèches F1 et F2, avec des modules électroniques de communication intégrés à l'unité centrale de gestion 1.

L'unité centrale de gestion 1 comporte généralement un microprocesseur et une mémoire programmable pour permettre de mémoriser les codes d'identification de chaque identifiant associé au véhicule. En outre, ce code comporte un codage du numéro de série du véhicule, pour distinguer les signaux entre les différents véhicules.

L'unité de gestion 1 commande les dispositifs de verrouillage électrique des ouvrants du véhicule, ainsi que l'immobilisation éventuelle de la colonne de direction, et l'inhibition des dispositifs d'alimentation en carburant et/ou d'allumage du moteur thermique du véhicule (non représentés). Les moyens de mémorisation de l'unité centrale 1 peuvent mémoriser les informations relatives à l'état de verrouillage/déverrouillage du véhicule, ainsi que les valeurs de certains paramètres de fonctionnement du véhicule, notamment l'état de marche du moteur ou le niveau de charge de sa batterie.

Chaque identifiant 9, 10 comporte également une unité électronique de dialogue pour lui permettre de communiquer avec les modules électroniques de communication de l'unité centrale 1. Chaque identifiant comporte, en outre, une batterie, par exemple une pile, pour alimenter les circuits électroniques de l'identifiant.

Dans un exemple de réalisation, l'identifiant communique avec l'unité centrale 1, en radiofréquence, par exemple à 434 MHz ou 868 MHz, alors que le moyen d'identification du véhicule communique, par les antennes 2 à 5, en basse fréquence, par exemple autour de 125 KHz.

Chaque identifiant 9, 10 comporte un générateur de signal sonore 9a, 10a, pour engendrer un signal sonore, comme matérialisé par les lignes d'ondes acoustiques 11, 12.

La figure du dessin annexé illustre le cas où l'identifiant 10 a été oublié dans le véhicule, après verrouillage des portières. Dans ce cas, l'unité centrale 1 provoque, par l'intermédiaire du moyen d'identification, l'émission d'un signal d'interrogation dans l'habitacle, à basse fréquence, par l'intermédiaire de l'antenne 2, ce qui réveille l'identifiant 10 et provoque la génération du signal sonore 12, permettant à l'utilisateur situé à l'extérieur du véhicule de localiser l'identifiant 10 oublié dans le véhicule.

Cette même figure illustre le cas où un identifiant 9 a été perdu à proximité du véhicule. Dans ce cas, une touche dédiée à la recherche des identifiants perdus, par exemple au niveau du tableau de bord du véhicule, permet de commander l'émission d'un signal de recherche par l'unité centrale 1, le signal de recherche étant envoyé à la fois par l'antenne 2 dans l'habitacle et par les antennes 3 à 5 à l'extérieur du véhicule, ce qui provoque la génération du signal sonore 11 à partir de l'identifiant 9, pour permettre son repérage.

Sur la figure, on peut également illustrer le cas où l'utilisateur s'approche du véhicule V, en portant l'identifiant 9, ce qui provoque un échange de données avec l'unité centrale 1, comme matérialisé par la flèche F1, pour permettre l'authentification de l'identifiant 9 et la commande de déverrouillage des ouvrants du véhicule. Lorsque l'identifiant 9 a été authentifié, le générateur 9a engendre un signal sonore 11, pour indiquer à l'utilisateur que le déverrouillage a bien été effectué. Inversement, lorsque l'utilisateur quitte le véhicule, en refermant la portière, un dialogue s'installe entre l'identifiant 9 porté par l'utilisateur et l'unité centrale 1 du véhicule, ce qui provoque la génération du signal sonore 11, du fait de l'authentification de l'identifiant 9, signalant ainsi à l'utilisateur que le verrouillage du véhicule aura bien lieu.

Bien entendu, le générateur de signal sonore ou bien un vibreur peut être utilisé pour d'autres applications, par exemple pour la détection de toute anomalie transmise à l'unité centrale.

Avantageusement, le signal sonore émis par chaque identifiant diffère selon l'état dans lequel se trouve l'identifiant, par exemple un bip signale une authentification correcte des identifiants, deux bips signalent le réveil de l'identifiant, trois bips signalent une alarme ou la présence de l'identifiant.

Bien que l'invention ait été décrite en liaison avec plusieurs exemples de réalisation particuliers, il est bien évident qu'elle n'y ait nullement limitée et qu'elle comprend tous les équivalents techniques des moyens décrits ainsi que leurs combinaisons si celles-ci entrent dans le cadre de l'invention.

## Revendications

1. Système d'accès dit "mains libres" pour un véhicule automobile (V), comportant un moyen d'identification (1) relié à une unité centrale de commande sur le véhicule, pour commander des moyens de verrouillage des ouvrants (3-5) du véhicule, et au moins un identifiant (9, 10) destiné à être porté par un utilisateur et apte à échanger à distance des données avec le moyen d'identification pour autoriser l'accès au véhicule, lorsque l'identifiant a été authentifié par le moyen d'identification, chaque identifiant (9, 10) étant équipé d'un générateur de signal sonore (9a, 10a) **caractérisé par le fait que** ce générateur comprend des moyens pour engendrer au moins un signal sonore (11, 12) pour signaler à l'utilisateur un état donné de l'identifiant, et ledit générateur (9a, 10a) est apte à engendrer un signal sonore d'authentification, en réponse à un signal d'interrogation émis par le moyen d'identification (1), lorsque l'identifiant (9, 10) a été authentifié par le moyen d'identification.

2. Système selon la revendication 1, **caractérisé par le fait que** ledit générateur (9a, 10a) est apte à engendrer un signal sonore de réveil, lorsque l'identifiant (9, 10) reçoit un signal basse fréquence ou haute fréquence, dont l'amplitude est supérieure à une valeur de seuil prédéterminé.

3. Système selon la revendication 1 ou 2, **caractérisé par le fait que**, lorsque l'identifiant (9, 10) émet un signal basse fréquence ou haute fréquence, l'unité de gestion sur l'identifiant contrôle le niveau de charge de la batterie de l'identifiant, et si ce niveau est inférieur à un niveau de seuil prédéterminé, le générateur (9a, 10b) de l'identifiant est apte à engendrer un signal sonore d'alarme.

4. Système selon l'une des revendications 1 à 3, **caractérisé par le fait que**, lorsque l'unité centrale de commande détecte la fermeture d'au moins un ouvrant (3-5) du véhicule, le moyen d'identification (1) émet un signal de désactivation dans l'habitacle du véhicule, pour désactiver le générateur (10a) de chaque identifiant authentique (10) présent dans le véhicule.

5. Système selon la revendication 4, **caractérisé par le fait que**, lorsque l'unité centrale de commande détecte la fermeture d'au moins un ouvrant (3-5) du véhicule, le moyen d'identification (1) émet un signal d'activation à l'extérieur du véhicule, pour réactiver le générateur (9a) éventuellement préalablement désactivé de chaque identifiant (9) situé à proximité du véhicule.

6. Système selon l'une des revendications 1 à 5, **caractérisé par le fait que**, lorsque l'unité centrale de commande détecte à la fois la fermeture d'un ouvrant (3-5) et l'état de marche du véhicule (V), le moyen d'identification (1) émet un signal d'interrogation à l'extérieur du véhicule, afin que le générateur (9a) de chaque identifiant (9) situé à proximité du véhicule réponde en engendrant un signal sonore de présence.

7. Système selon l'une des revendications 1 à 6, **caractérisé par le fait que**, lorsque l'unité centrale de commande détecte un ordre de verrouillage du véhicule à partir de l'extérieur, le moyen d'identification (1) émet un signal d'interrogation dans l'habitacle (H) du véhicule, afin que le générateur (10a) de chaque identifiant (10) présent dans le véhicule réponde en engendrant un signal sonore de présence.

8. Système selon l'une des revendications 1 à 7, **caractérisé par le fait que**, lorsque l'unité centrale de commande détecte un ordre de recherche d'identifiant, par exemple sous l'action d'un bouton de commande spécifique dans l'habitacle (H), le moyen d'identification (1) émet un signal d'interrogation à la fois dans l'habitacle et à l'extérieur du véhicule (V), afin que le générateur (9a, 10a) de chaque identifiant (9, 10) présent dans l'habitacle et à proximité du véhicule réponde en engendrant un signal sonore de présence.

9. Système selon l'une des revendications 1 à 6, modifiées par le fait que le générateur de signal sonore (9, 10) est remplacé par un vibreur apte à engendrer des vibrations (11, 12) et à les transmettre à l'utilisateur qui porte l'identifiant.

10. Système selon l'une des revendications 1 à 9, **caractérisé par le fait que** le signal sonore ou les vibrations (11, 12) diffèrent selon l'état de l'identifiant à signaler à l'utilisateur.

## Patentansprüche

1. Freihand-Zugangssystem für ein Kraftfahrzeug (V), mit einem Identifikationsmittel (1), das mit einer Steuerzentraleinheit am Fahrzeug verbunden ist, um Mittel zum Verriegeln der Fahrzeugtüren (3 - 5) zu steuern, und zumindest einem Identifizierer (9, 10), der zum Mitführen durch einen Benutzer bestimmt ist und mit dem Identifikationsmittel Daten über eine Entfernung austauschen kann, um den Zugang zum Fahrzeug dann zu gestatten, wenn der Identifizierer vom Identifikationsmittel authentifiziert wurde, wobei jeder Identifizierer (9, 10) mit einem Tonsignalgenerator (9a, 10a) ausgestattet ist, **dadurch gekennzeichnet, dass** dieser Signalgenerator Mittel enthält, um zumindest ein akustisches Signal (11, 12) zu erzeugen, um dem Benutzer einen gegebenen Zustand des Identifizierers anzugeben, und der genannte Signalgenerator (9a, 10a) ein akustisches Authentifizierungssignal in Antwort auf ein Abfragesignal erzeugen kann, das vom Identifikationsmittel (1) dann ausgebeben wird, wenn der Identifizierer (9, 10) vom Identifikationsmittel authentifiziert wurde.

2. System nach Anspruch 1, **dadurch gekennzeichnet, dass** der genannte Signalgenerator (9a, 10a) ein akustisches Wecksigrial dann erzeugen kann, wenn der Identifizierer (9, 10) ein Niederfrequenz- oder Hochfrequenzsignal empfängt, dessen Amplitude höher ist als ein vorbestimmter Schwellwert.

3. System nach Anspruch 1 oder 2, **dadurch gekennzeichnet, dass** dann, wenn der Identifizierer (9, 10) ein Niederfrequenz- oder Hochfrequenzsignal ausgibt, die Leitheinheit am Identifizierer den Ladestand der Batterie des Identifizierers überprüft, und wenn dieser Ladestand unter einem vorbestimmten Schwellwertstand liegt, der Signalgenerator (9a, 10a) des Identifizierers ein akustisches Warnsignal erzeugen kann.

4. System nach einem der Ansprüche 1 bis 3, **dadurch gekennzeichnet, dass** dann, wenn die Steuerzentraleinheit das Schließen zumindest einer Fahrzeugtür (3 - 5) erfasst, das Identifikationsmittel (1) ein Deaktivierungssignal im Fahrgastraum des Fahrzeugs ausgibt, um den Signalgenerator (10a) eines jeden im Fahrzeug vorhandenen authentischen Identifizierers (10) zu deaktivieren.

5. System nach Anspruch 4, **dadurch gekennzeichnet, dass** dann, wenn die Steuerzentraleinheit das Schließen zumindest einer Fahrzeugstür (3 - 5) erfasst, das Identifikationsmittel (1) ein Aktivierungssignal nach außerhalb des Fahrzeugs ausgibt, um den gegebenenfalls zuvor deaktivierten Signalgenerator (9a) eines jeden nahe dem Fahrzeug befindlichen Identifizierers (9) zu reaktivieren.

6. System nach einem der Ansprüche 1 bis 5, **dadurch gekennzeichnet, dass** dann, wenn die Steuerzentraleinheit zugleich das Schließen einer Fahrzeugtür (3 - 5) und den Fahrzustand des Fahrzeugs (V) erfasst, das Identifikationsmittel (1) ein Abfragesignal nach außerhalb des Fahrzeugs ausgibt, damit der Signalgenerator (9a) eines jeden nahe dem Fahrzeug befindlichen Identifizierers (9) in Antwort ein akustisches Anwesenheitssignal erzeugt.

7. System nach einem der Ansprüche 1 bis 6, **dadurch gekennzeichnet, dass** dann, wenn die Steuerzentraleinheit einen Befehl zum Verriegeln des Fahrzeugs von außerhalb erfasst, das Identifikationsmittel (1) ein Abfragesignal im Fahrgastraum (H) des Fahrzeugs ausgibt, damit der Signalgenerator (10a) eines jeden im Fahrzeug vorhandenen Identifizierers (10) in Antwort ein akustisches Anwesenheitssignal erzeugt.

8. System nach einem der Ansprüche 1 bis 7, **dadurch gekennzeichnet, dass** dann, wenn die Steuerzentraleinheit einen Befehl zum Aufspüren des Identifizierers erfasst, beispielsweise unter der Wirkung eines speziellen Steuerknopfs im Fahrgastraum (H), das Identifikationsmittel (1) ein Abfragesignal im Fahrgastraum und zugleich nach außerhalb des Fahrzeugs (V) ausgibt, damit der Signalgenerator (9a, 10a) eines jeden im Fahrgastraum und nahe dem Fahrzeug vorhandenen Identifizierers (9, 10) in Antwort ein akustisches Anwesenheitssignal erzeugt.

9. System nach einem der Ansprüche 1 bis 6, dadurch abgewandelt, dass der Akustiksignalgenerator (9, 10) durch einen Vibrator ersetzt wird, der Vibrationen (11, 12) erzeugen und zu dem den Identifizierer mit sich führenden Benutzer übertragen kann.

10. System nach einem der Ansprüche 1 bis 9, **dadurch gekennzeichnet, dass** das akustische Signal bzw. die Vibrationen (11, 12) sich je nach dem Benutzer anzugebenen Zustand des Identifizierers unterscheiden.

## Claims

1. A "hands-free" access system for a motor vehicle (V), comprising an identification means (1) connected to a central control unit on the vehicle for controlling locking means of the opening elements (3 - 5) of the vehicle, and at least one identifier (9, 10) arranged to be carried by a user and adapted for the remote exchange of data with the identification means whereby to authorise access to the vehicle when the identifier has been authenticated by the identification means, each identifier (9, 10) being equipped with an audio signal generator (9a, 10a), **characterised by** the fact that the said generator includes means for generating at least one audible signal (11, 12) for signalling to the user a given state of the identifier, and the said generator (9a, 10a) is adapted to generate an audible authentication signal in response to an interrogation signal emitted by the identification means (1) when the identifier (9, 10) has been authenticated by the identification means.

2. A system according to Claim 1, **characterised by** the fact that the said generator (9a, 10a) is adapted to generate an audible alarm signal, when the identifier (9, 10) receives a low frequency or high frequency signal the amplitude of which is greater than a predetermined threshold value.

3. A system according to Claim 1 or Claim 2, **characterised by** the fact that, when the identifier (9, 10) emits a low frequency or high frequency signal, the management unit on the identifier controls the level of charge of the battery of the identifier, and if this level is lower than a predetermined threshold level, the generator (9a, 10b) of the identifier is adapted to generate an audible alarm signal.

4. A system according to one of Claims 1 to 3, **characterised by** the fact that, when the central control system detects closing of at least one opening element (3 - 5) of the vehicle, the identification means (1) emits a de-activation signal in the cabin of the vehicle, whereby to deactivate the generator (10a) of each authentic identifier (10) present in the vehicle.

5. A system according to Claim 4, **characterised by** the fact that, when the central control unit detects closing of at least one opening element (3 - 5) of the vehicle, the identification means (1) emits an activation system outside the vehicle, in order to re-activate the generator (9a) which may previously have been de-activated on each identifier (9) situated close to the vehicle.

6. A system according to one of Claims 1 to 5, **characterised by** the fact that, when the central control unit detects simultaneously the closure of an opening element (3 - 5) and the running regime of the vehicle (V), the identification means (1) emits an interrogation signal outside the vehicle, whereby the generator (9a) of each identifier (9) situated close to the vehicle responds by generating an audible presence signal.

7. A system according to one of Claims 1 to 6, **characterised by** the fact that, when the central control unit detects an order for unlocking the vehicle from outside, the identification means (1) emits an interrogation signal in the cabin (H) of the vehicle, whereby the generator (10a) of each identifier (10) present in the vehicle responds by generating an audible presence signal.

8. A system according to one of Claims 1 to 7, **characterised by** the fact that, when the central control unit detects an order to search for an identifier, for example under the action of a specific control button in the cabin (H), the identification means (1) emits an interrogation signal simultaneously in the cabin and outside the vehicle (V), whereby the generator (9a, 10a) of each identifier (9, 10) present in the cabin and close to the vehicle responds by generating an audible presence signal.

9. A system according to one of Claims 1 to 6, modified by the fact that the audio signal generator (9, 10) is replaced by a buzzer adapted to generate vibrations (11, 12) and transmit them to the user who carries the identifier.

10. A system according to one of Claims 1 to 9, **characterised by** the fact that the audible signal, or the vibrations (11, 12), differ according to the state of the identifier to be signalled to the user.
